# EUROPEAN PATENT APPLICATION

(11) **EP 4 657 656 A2**
(43) Date of publication of application: **03.12.2025**
(21) Application number: 25179729.6
(22) Date of filing: 29.05.2025
(51) Int. Cl.: H01Q 1/32, B60R 13/02, B62D 25/06, H01Q 21/28

(54) **VEHICLE ROOF ASSEMBLY WITH INTEGRATED RF TRANSPARENCY FOR ELECTRONIC MODULE CONSOLIDATION**

(30) Priority: 29.05.2024 US 202418677202
(71) Applicant: Tesla, Inc., Austin, TX 78725 (US)
(72) Inventor: ZUCKER, George, Austin, 78725 (US); VENHOVENS, Paul J., Austin, 78725 (US); TUCHEL, James Alexander Morris, Austin, 78725 (US); YERRA, Veera Aditya Choudary, Austin, 78725 (US); MURTHY, Aditya Suresh, Austin, 78725 (US); LE TOUMELIN, Loic Jean Claude, Austin, 78725 (US)
(74) Representative: Bryn-Jacobsen, Caelia

(57) **Abstract**

An example vehicle roof assembly is disclosed, featuring an outer roof panel made from radio frequency (RF) transparent polymer materials, such as Polycarbonate (PC), Acrylonitrile Butadiene Styrene (ABS), or Acrylonitrile Styrene Acrylate (ASA). In some examples, this assembly enables the integration of overhead electrical modules and components, including antennae, directly into the roof structure, facilitating clear communication with external devices and satellites. The design incorporates a membrane effect for enhanced occupant protection during impacts, and the use of integrated foams between the exterior roof and interior headliner improves thermal and acoustic insulation. The assembly process is streamlined by pre-populating the roof with electrical components, allowing for a single-unit installation and the potential for full automation in the assembly line. The roof's polymer construction also offers enhanced dent resistance, color options, and inherent corrosion resistance, while meeting safety standards such as the Head Injury Criterion (HIC) values.

## Description

### TECHNICAL FIELD

The present disclosure relates generally to vehicle construction and, more specifically, to an integrated roof assembly for vehicles that incorporates radio frequency (RF) transparent materials to enable integration of overhead electrical modules and components.

### BACKGROUND

Traditional vehicle roof constructions typically involve the use of metallic or glass materials that provide structural integrity and protection from environmental elements. However, these materials present limitations when it comes to the integration of modern vehicular technologies, particularly those requiring radio frequency (RF) transmission and reception. Metallic roofs, while offering structural rigidity, act as a barrier to RF signals, necessitating the placement of antennae and other communication devices externally. Glass roofs, on the other hand, allow for RF transparency but pose challenges in terms of integrating electronic components without compromising aesthetic appeal and visibility.

Furthermore, the assembly of electronic modules and components in vehicles with conventional roofs often requires complex, time-consuming processes that involve multiple connections and can lead to ergonomic challenges for assembly workers. Overhead installation processes, in particular, are labor-intensive and can limit opportunities for automation within the assembly line. Additionally, traditional roof constructions may not adequately address the need for thermal and acoustic insulation, occupant protection, and compliance with safety regulations such as head impact criteria.

### BRIEF SUMMARY

Some examples of the present disclosure provide a vehicle roof assembly that utilizes radio frequency (RF) transparent polymer materials to enable the integration of overhead electrical modules and components directly into the roof structure. This approach addresses limitations of traditional metallic and glass roofs by allowing RF signals to pass through the roof material, thereby facilitating the consolidation of electronic systems and antennae that require a clear path to communicate with external devices and satellites.

Some examples of vehicle roof assembly herein comprises high-strength polymer blends, such as Polycarbonate (PC), Acrylonitrile Butadiene Styrene (ABS), or Acrylonitrile Styrene Acrylate (ASA), which are selected for their RF transparency as well as their structural properties. In some examples, these materials provide appropriate strength for crashworthiness, stiffness for noise, vibration, and harshness (NVH) control, and compliance for head impact regulations. In some examples, the incorporation of these polymers also allows for the roof to be opaque, thereby reducing solar radiation transmission, lowering thermal load on the cabin, and improving thermal comfort for vehicle occupants.

Some examples enable a capability to pre-populate the roof construction with selected electrical components, which can then be installed as a single unit during vehicle assembly. This can result in efficiencies for assembly workers and a reduction in assembly time and effort. In some examples, a vehicle roof assembly can be pre-assembled on a horizontal surface, eliminating the need for overhead installation processes and enabling full automation of the roof sub-system assembly.

Some examples further provide enhanced thermal and acoustic insulation through the use of foams between the exterior polymer roof and the interior headliner. The polymer roof construction offers superior acoustic insulation properties to reduce in-cabin airborne noise.

In traditional vehicle designs, the headliner is typically a separate component from the roof and is designed to compress to absorb energy during an impact. This compression is the primary means by which the headliner mitigates the force of the impact to protect the occupant's head, and it requires a certain thickness or space between the headliner and the roof to provide enough cushioning.

In contrast, some examples herein utilize a polymer roof construction that exhibits a "membrane effect." A membrane effect of the polymer roof contributes to occupant crash protection by allowing the roof (for example the outer RF transparent polymer roof panel) and head dome (for example defined in the inner substrate assembly) to stroke (or move) together through deflection, as opposed to traditional headliners that rely solely on compression. In other words, the term "stroke together through deflection" in the context of a vehicle roof and head dome refers to the way the roof material and the interior headliner (often referred to as the head dome) respond to an impact, such as a passenger's head contacting the roof during a collision. In some examples, the outer RF transparent polymer roof panel and the inner substrate assembly can stroke together during an impact.

The polymer material of the roof itself has a degree of flexibility and can deflect or bend to some extent. When an impact occurs, the polymer roof and the head dome can move together as a single unit, bending inwards to absorb the energy of the impact. This deflection of the outer roof substrate, in combination with the head dome, provides an additional mechanism for energy absorption. One convenience of this design is that it can reduce the need for a thick cushioning layer between the headliner and the roof, as the roof material itself contributes to impact protection. This can result in a thinner overall roof construction, allowing for more headroom inside the vehicle and potentially reducing the weight of the roof assembly. Disclosed examples still meet safety standards, such as the Head Injury Criterion (HIC) values specified by regulations like the Federal Motor Vehicle Safety Standard (FMVSS) 201U, which governs upper interior head impact protection.

In some examples, when an object, such as an occupant's head, impacts the roof, the membrane effect allows the polymer material to deflect, absorbing and dissipating the energy over a larger area. This reduces the force transmitted to the object, in this case, the occupant's head, potentially reducing injury. The compliant nature of the polymer material means that it can deform to a certain extent without breaking or fracturing. This compliance can be helpful for absorbing impact energy and providing a cushioning effect. Traditional vehicle roofs may require thicker, more rigid materials to provide structural integrity and impact protection. The membrane effect of a polymer roof allows for a thinner construction while still meeting safety standards, as the material itself can contribute to energy absorption. Vehicles must comply with safety standards such as the Federal Motor Vehicle Safety Standard (FMVSS) 201U, which specifies criteria for upper interior head impact protection. The membrane effect of the polymer roof can help meet these criteria by allowing the roof and headliner to stroke together, or move in unison, to absorb the impact energy effectively. In some examples, the membrane effect can provide more design flexibility, as the roof can be engineered to have varying degrees of flexibility and stiffness in different areas, optimizing it for both impact protection and overall vehicle performance. In some examples, the membrane effect of the polymer roof construction enhances impact protection by allowing the roof to flex and absorb energy during an impact, which can reduce the severity of injuries to occupants and provide more design options for vehicle manufacturers.

Some example assemblies of a roof structure disclosed herein also benefit from part reduction, as rib features and forms can be molded into the polymer geometry, eliminating the need for additional metallic roof crossbows. The polymer material offers superior dent resistance, better craftsmanship through molded datum pins, sharper feature formability, a variety of color options, and inherent corrosion resistance.

Some examples seek to provide a vehicle roof assembly that not only enhances integration and performance of electronic systems within the vehicle but also offers improvements in manufacturing efficiency, vehicle safety, and occupant comfort.

### BRIEF DESCRIPTION OF THE DRAWINGS

Throughout the drawings, reference numbers may be re-used to indicate correspondence between referenced elements. The drawings are provided to illustrate examples of the subject matter described herein and not to limit the scope thereof.
**FIG. 1** is a perspective part-sectional view of a vehicle roof assembly installed on a vehicle, according to some examples.
**FIG. 2A** is a perspective view of an example antenna module and mounting housing for integration with an outer RF transparent polymer roof panel, illustrating example pre-populated electrical components and antennae, according to some examples.
**FIG. 2B** is a side pictorial view of the example antenna module and mounting housing of **FIG. 2A****.**
**FIG. 3** is a component diagram showing example electrical components and their connections to a vehicle's systems, including cabin radar and car computer, according to some examples.
**FIG. 4A** is an exploded view of an example first vehicle roof subassembly kit, showing an outer RF transparent polymer roof panel and associated piece parts, such as grounding plates, mounting brackets, and datum blocks.
**FIG. 4B** is an exploded view of an example second vehicle roof subassembly kit, displaying example components of the inner substrate assembly, including the wrapped polymer substrate and insulation layers, according to some examples.
**FIG. 4C** illustrates an exemplary first adhesive application pattern for bonding the wrapped polymer substrate to the insulation layer.
**FIG. 5** is a flow diagram of example operations in the method for forming a vehicle roof, according to some examples.
**FIG. 6** provides enlarged views of an example first vehicle roof subassembly, an example antenna module and mounting housing, an example closeout panel, and an example completed vehicle roof assembly, including an example adhesive application pattern for bonding the assembly onto a vehicle.
**FIG. 7** is a table listing example specifications of various components of an example vehicle roof assembly, according to some examples.
**FIG. 8** is a process flow diagram illustrating example operations in assembling a vehicle roof, according to some examples.

### DETAILED DESCRIPTION

Some examples herein provide a vehicular roof assembly wherein a radio frequency (RF) transparent polymer is employed as a primary material for the roof's construction. This material selection facilitates the integration and consolidation of electrical components that interface with both the interior and exterior of the vehicle's cabin. The roof assembly is designed to be populated with the desired or requisite electrical components and installed as a singular unit during the vehicle's assembly process. In some examples, this approach can provide manufacturing efficiencies and, in some instances, obviate the need for overhead in-vehicle assembly, thereby yielding ergonomic benefits for assembly line workers.

The roof construction utilizes high-strength polymer blends, including but not limited to Polycarbonate (PC), Acrylonitrile Butadiene Styrene (ABS), and Acrylonitrile Styrene Acrylate (ASA). These materials are selected for their ability to meet structural roof requirements, such as crashworthiness, which is typically quantified by strength; Noise, Vibration, and Harshness (NVH), which is typically quantified by stiffness; and compliance with head impact regulations, which is typically quantified by energy absorption capabilities. The opaque nature of the roof in some examples serves to prevent or reduce solar radiation from penetrating the cabin, thereby reducing the thermal load and enhancing thermal comfort for occupants. Secondly, the opacity of the roof allows for the use of foams between the exterior polymer roof and the interior headliner to further enhance thermal insulation.

The RF transparency characteristic of the selected polymers can in some examples be important for the integration of various electronic components and antennae, which reduces the overall number of endpoints and electrical connections within the vehicle. Electrical modules, which typically include components for interior infotainment systems and exterior RF communication devices, are conventionally packaged in the insulated space between the exterior roof and the interior headliner. These modules require a Field-Of-View (FOV) that is unobstructed by RF opaque materials, necessitating the use of frequency transparent materials for surrounding substrates and panels.

By employing polymer blends, some examples enable RF transmission from all the modules to satellites and other communication devices both inside and outside the vehicle. This integration into a single electronic module can result in a reduction of parts, consolidation of connectors, and performance enhancements due to the co-location of processing/compute capabilities and the reduction of losses over cable length and connectors.

In addition to thermal benefits, the polymer roof construction with an intermediate foam layer can provide enhanced acoustic insulation and absorption properties. Examples significantly reduce in-cabin airborne noise generated by wind and road conditions.

Occupant crash protection is also a feature of some examples. The polymer roof's membrane effect, in contrast to traditional glass roofs, allows for the roof and head dome to stroke together through deflection of the outer roof substrate. This is due to the low modulus of the polymer material, which enables a reduced section between the headliner and roof for the head dome to stroke, as opposed to the compression-only mechanism of traditional headliners that require greater thickness.

The assembly process is streamlined in some examples by consolidating electrical components into larger modules and reducing the number of electrical interconnections, which may result in a 3 to 5-fold reduction in assembly effort and time. Factory ergonomics are improved as the roof assembly can be pre-assembled on a horizontal surface upside down, allowing for a layered install sequence without the need for overhead installation processes. The design also facilitates factory automation by enabling a fully automated layered assembly of the roof sub-system.

The polymer roof's design includes molded rib features and forms, which may eliminate the need for welded metallic roof crossbows used in traditional metallic roof constructions. This results in part reduction and superior dent resistance compared to the brittle nature of glass roofs. The ability to mold datum pins directly into the panel ensures best craftsmanship conditions between panels, without reliance on assembly fixtures. The polymer material may also offer formability conveniences, allowing for reduced radii and sharper features or facets compared to traditional stamping processes. Additionally, the polymer roof provides opportunities for colorant within the resin, negating the need for post-process painting, and inherently possesses corrosion resistance, reducing the need for additional corrosion protection and post-processing.

Some examples also address limitations found in traditional vehicular designs, which often feature a "shark fin" exterior antenna for LTE and GNSS communications mounted on a metallic roof. The metal roof, typically composed of aluminum or steel, serves as a ground plane for the antenna, contributing to the vehicle's structural rigidity and stiffness. However, this metallic layer also acts as an RF barrier, preventing the consolidation of interior-facing wireless modules due to its RF opaque nature. Some examples of a polymer roof assembly disclosed herein seek to overcome this limitation by providing an RF transparent environment, allowing for the integration of both interior and exterior communication modules without the interference issues associated with metallic substrates.

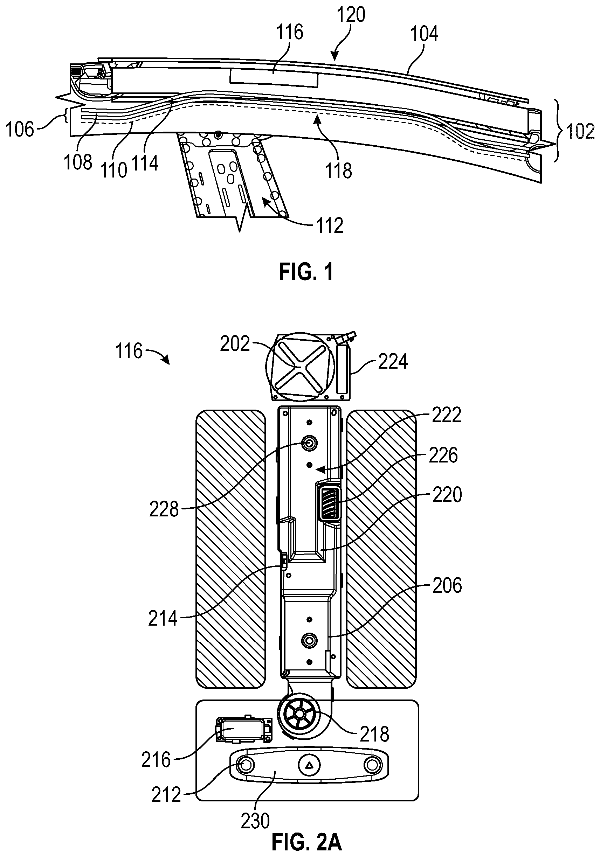

**FIG. 1** shows an example vehicle roof assembly 102 installed in a roof of a vehicle. The vehicle roof is shown generally at roof 120. The illustrated portion of the vehicle roof assembly 102 is installed adjacent to and supported at least in part by a B-pillar 112 of the vehicle. The vehicle roof assembly 102 broadly comprises at least two vehicle roof subassemblies, described further below in conjunction with a method of assembling the vehicle roof assembly 102. A first vehicle roof subassembly includes an outer RF transparent polymer roof panel 104 that, in some examples, is prepopulated for installation into the vehicle roof assembly 102 with one more electrical components shown generally as electrical components 116. More specific types and configurations of the electrical components 116 are described below.

The vehicle roof assembly 102 further comprises an inner substrate assembly 106. In some examples, the inner substrate assembly 106 comprises a wrapped polymer substrate 114, one or more insulation layers 108 (for example comprising cellular or fibrous foam), and a headliner 110 (or trim). In some examples, the inner substrate assembly 106 defines a shaped free region or zone known as a head dome 118. This area accommodates a vehicle occupant's head. In some examples, the head dome 118 of the inner substrate assembly 106 and the outer RF transparent polymer roof panel 104 can stroke together during an impact by virtue of the membrane effect described further above.

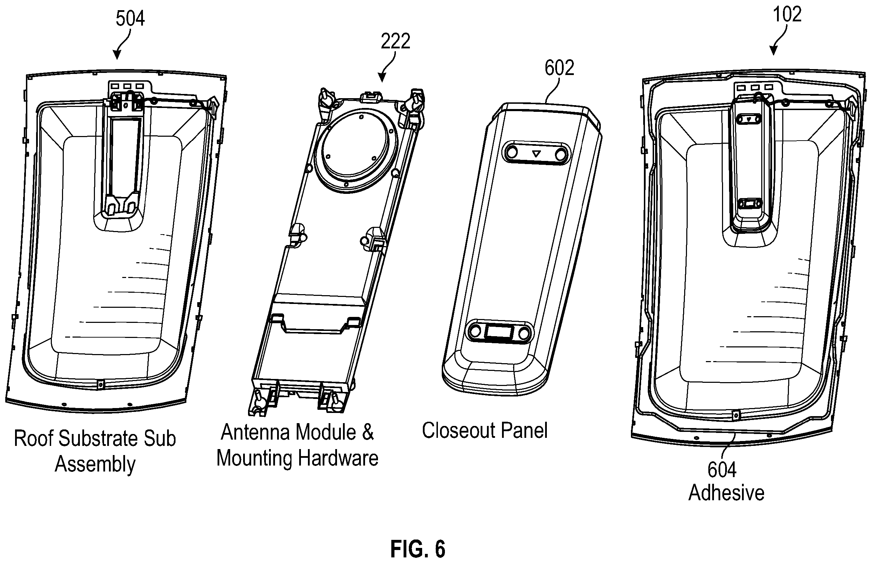

**FIG. 2A** **-** **FIG. 2B** show examples of the one or more electrical components 116 that may be prepopulated or preinstalled into the outer RF transparent polymer roof panel 104 of **FIG. 1** before installation of the outer RF transparent polymer roof panel 104 into a vehicle roof assembly 102 of **FIG. 1****.** The electrical components 116 may be housed within or located on an antenna module and mounting housing 222. The antenna module and mounting housing 222 may be provided with, or include a closeout panel 602 seen more clearly in **FIG. 6** below. The antenna module and mounting housing 222 may accommodate and support one or more electrical components 116 such as a satellite communication component 224, a satellite antenna 202, a Long Term Evolution LTE component 232, an LTE antenna 204, a speaker 228, a fan 218, a fan air intake duct 226, a connectivity card 214, a processor 220, a Bluetooth low energy component 206, a microphone 216, a map light 212, and a switch 230. The switch 230 may include a manually operable switch to operate the vehicle hazard lights, for example.

The satellite communication component 224 may communicate with an external device 208, such as a GNSS satellite using the satellite antenna 202. The LTE antenna 204 may communicate with an external device 210 such as a 3G, 4G, or 5G LTE network. Other antennae are possible such as antennae for making Wi-Fi and/or Bluetooth connections for one or more of the electrical components 116.

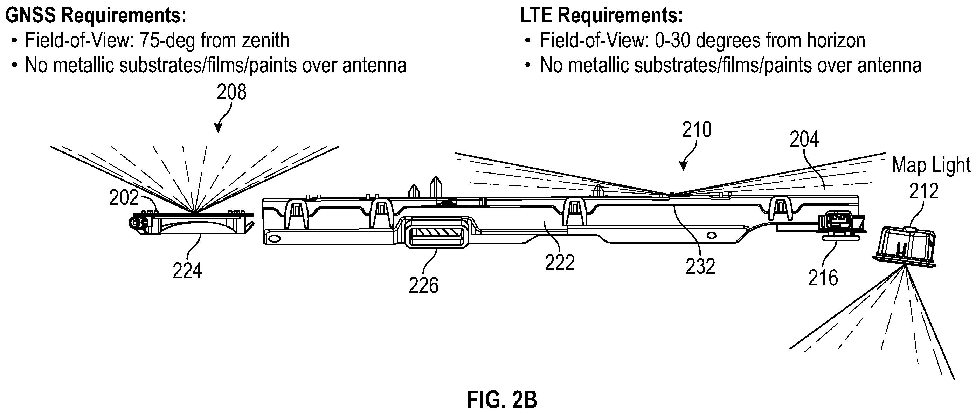

It will be seen from the view of **FIG. 2B** that, in some examples, there are no metallic substrates, films, or paints over the outer surface of the outer RF transparent polymer roof panel 104 of **FIG. 1** nor, in some examples, over the outer surfaces of the satellite antenna 202 and the LTE antenna 204 integrated within the outer RF transparent polymer roof panel. This arrangement provides a clear and unobstructed view for these components to communicate with their respective external devices, satellites, networks, and so forth.

As mentioned above, some examples herein thus seek to address limitations found in traditional vehicular designs, which often feature a "shark fin" exterior antenna for LTE and GNSS communications mounted on a metallic roof. The metal roof, typically composed of aluminum or steel, serves as a ground plane for the antenna, contributing to the vehicle's structural rigidity and stiffness. However, this metallic layer also acts as an RF barrier, preventing the consolidation of interior-facing wireless modules due to its RF opaque nature. Some examples of a polymer roof assembly disclosed herein seek to overcome this limitation by providing an RF transparent environment, allowing for the integration of both interior and exterior communication modules without the interference issues associated with metallic substrates.

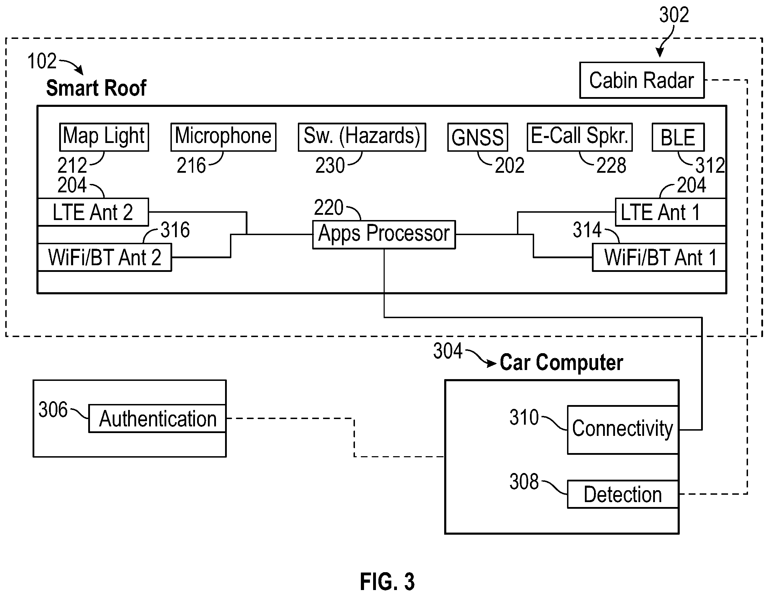

**FIG. 3** shows an example component diagram of some of the example electrical components 116 of an example vehicle roof assembly 102. The illustrated electrical components 116 include a microphone 216, a switch 230, a satellite antenna 202, a speaker 228, a Bluetooth low energy component 312, one or more LTE antennae 204, a first Wi-Fi/Bluetooth antenna 314, a second Wi-Fi/Bluetooth antenna 316, and a processor 220 (referred to as an applicant submits processor in the view).

The electrical components 116 of the vehicle roof assembly 102 (referred to as a smart roof in the view of **FIG. 3**) are electrically connected to a cabin radar 302 and a car computer 304. The cabin radar 302 is electrically connected to, or may include a suite of sensors 308 to detect an occupant of, or unauthorized entry into, an interior of the car (vehicle). An occupant of the car may be authenticated by an authentication module 306 based on one or more items of personal data or device identification data (e.g., device IDs). A connectivity module 310 may check a connection status of one or more of the connectivity cards 214 of **FIG. 2A****,** the processor 220 of FIG. 2, the satellite communication component 224 of FIG. 2, the satellite antennae 202, the LTE component 232, the LTE antenna 204, and/or one or more of the other electrical components 116.

As mentioned above in connection with **FIG. 1****,** in some examples the vehicle roof assembly 102 broadly comprises at least two vehicle roof subassemblies. Various parts for forming or assembling the vehicle roof subassemblies may be provided in the form of one or more kits.

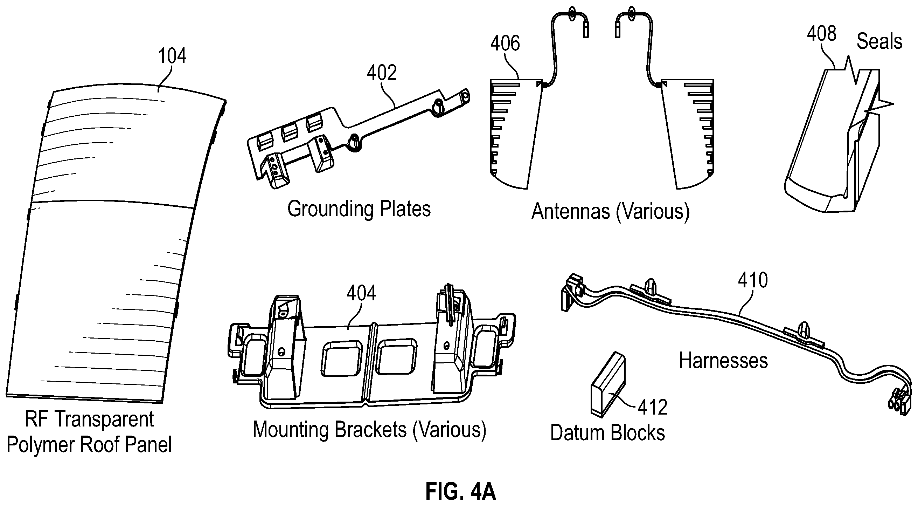

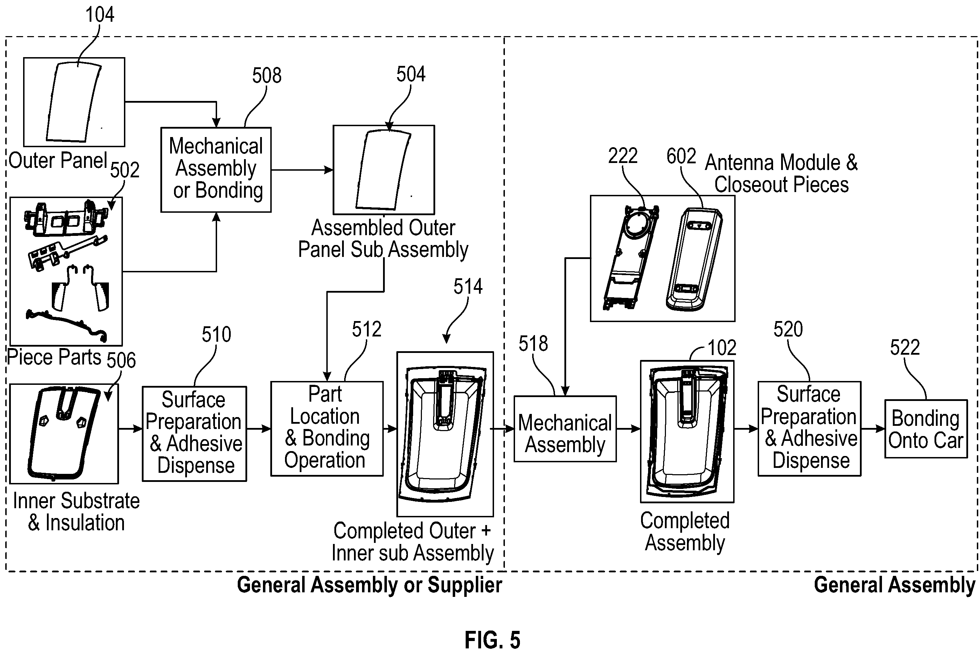

With reference to **FIG. 4A****,** example components in a first vehicle roof assembly or kit of parts are shown. In the illustrated example, these components include an outer RF transparent polymer roof panel 104, and a set of other smaller components called piece parts 502 in **FIG. 5****.** The piece parts 502 may include one or more grounding plates 402, one or more mounting brackets 404, one or more seals 408, and one or more antennae 406. The antennae 406 may include one or more satellite antennae 202, and/or one or more LTE antennae 204 (**FIG. 2A** and **FIG. 2B**). Other antennae are possible. In some examples, the piece parts 502 further comprise one or more wiring harnesses 410, and one or more datum blocks 412. An assembled first vehicle roof subassembly 504 is shown in **FIG. 5** and its manner of assembly is described further below with reference to that figure.

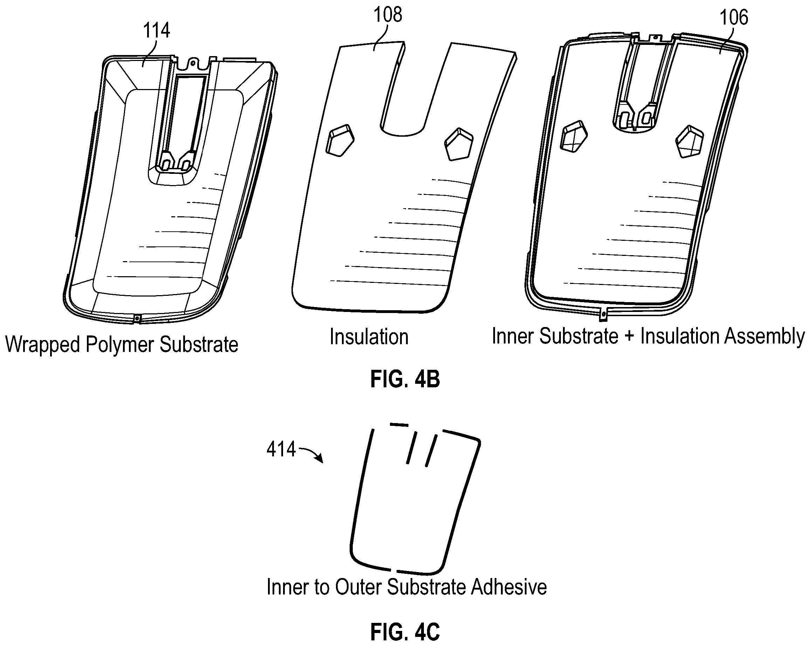

With reference to **FIG. 4B****,** example components of a second vehicle roof subassembly or kit of parts are shown. These example components include a wrapped polymer substrate 114 and one or more insulation layers 108 (each visible in **FIG. 1**). These components may be bonded together by adhesive to form an inner substrate assembly 106 (also visible in **FIG. 1****,** and shown in assembled form as a second vehicle roof subassembly 506 in **FIG. 5**). The second vehicle roof subassembly 506 may be constituted by, or at least include the inner substrate assembly 106 of **FIG. 6****.**

In the construction and/or configuration of a vehicle roof assembly, some examples include materials for the inner substrate assembly 106 to optimize thermal insulation and noise dampening. Some materials may be selected for their insulative properties and sound absorption characteristics, and suitability for incorporation into a vehicle roof assembly.

Polyurethane foam has excellent thermal insulation properties and an ability to absorb sound. Its versatility allows it to be shaped and fitted into the complex geometries of a vehicle roof, providing a custom fit that enhances its insulative and noise-dampening performance. Another suitable material is polyethylene foam, which is lightweight and has good thermal insulation properties. It also contributes to sound dampening and can be used effectively in vehicle roof assemblies where weight reduction is a priority. For superior sound absorption, melamine foam can be utilized within the vehicle roof assembly. While it is primarily known for its sound-absorbing properties, melamine foam also offers good thermal insulation, making it a dual-purpose material in the automotive context. Mass Loaded Vinyl (MLV) is a relatively dense material that may serve as an effective barrier to airborne noise. When incorporated into a vehicle roof assembly, MLV can significantly reduce the transmission of external noise into the cabin, enhancing the overall acoustic comfort for occupants. Closed-cell foam is another material that provides excellent thermal insulation and is resistant to moisture. This resistance to moisture is particularly beneficial in preventing condensation within the vehicle roof assembly, thereby maintaining the efficiency of the insulation over time.

In some examples of an inner substrate assembly 106 addressing both thermal and acoustic challenges, thermo-acoustic insulation panels can be employed. These panels typically comprise a sound-absorbing layer bonded to a thermal insulating layer, often made from materials such as polypropylene or polyester fibers. In applications where space is at a premium, aerogel insulation may be used due to its exceptional thermal insulation properties in a very thin profile. Although aerogel is a more costly option, its performance can justify the expense in certain design scenarios.

Textile-based insulation, made from non-woven textiles, offers a lightweight and versatile option for both thermal and acoustic insulation. These textiles can be treated with flame retardants to ensure compliance with automotive safety standards, making them a safe choice for vehicle roof assemblies. Lastly, damping compounds, which are viscoelastic materials, can be applied to substrates within the vehicle roof assembly to reduce vibration and noise transmission. These compounds are particularly effective in dampening resonant frequencies that contribute to in-cabin noise. When selecting materials for the inner substrate assembly, example factors may include weight, flammability, installation ease, environmental resistance, and compliance with automotive safety standards. A combination of the aforementioned materials is employed in some examples to achieve an optimal balance of thermal insulation, noise reduction, and overall vehicle performance.

**FIG. 4C** shows an example first adhesive application pattern 414 for joining the wrapped polymer substrate 114 and the insulation layer 108 together to form the inner substrate assembly 106 of the second vehicle roof subassembly 506. Other adhesive patterns are possible.

Some examples disclosed herein include methods. With reference to **FIG. 5****,** example operations in a method of forming a vehicle roof are now described. Although the described flow can show operations as a sequential process, many of the operations can be performed in parallel or concurrently. In addition, the order of the operations may be re-arranged.A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

In operation 508, the outer RF transparent polymer roof panel 104 and the piece parts 502 are mechanically assembled or bonded together to form an assembled first vehicle roof subassembly 504. In operation 510, one or more adhesive receiving surfaces of a second vehicle roof subassembly 506 are prepared (surface preparation) and adhesive is applied thereto. The second vehicle roof subassembly 506 may previously have been assembled as described above with reference to **FIG. 4B****.** In operation 512, the first vehicle roof subassembly 504 and the second vehicle roof subassembly 506 are located together or otherwise aligned (part location) and bonded together to form a completed outer and inner subassembly 514. The foregoing operations may be completed as part of a general vehicle assembly performed by a vehicle manufacturer, for example, or by a supplier of completed outer and inner subassemblies 514. The following operations may be completed as part of a general vehicle assembly performed by a vehicle manufacturer.

For ease of assembly, in operation 516, the completed outer and inner subassembly 514 may be inverted, for example in a vehicle assembly line at a vehicle manufacturing plant. In operation 518, an antenna module and mounting housing 222 and closeout panel 602 are mechanically assembled to the completed outer and inner subassembly 514. The completed outer and inner subassembly 514 may, or may not, be inverted when the antenna module and mounting housing 222 and closeout panel 602 are mechanically assembled to the completed outer and inner subassembly 514 to form a completed vehicle roof assembly 102. In operation 520, one or more adhesive receiving surfaces of the completed vehicle roof assembly 102 are prepared (surface preparation) and adhesive is applied thereto. The adhesive may be applied in a second adhesive application pattern 604 shown in **FIG. 6****,** for example. In operation 522, the vehicle roof assembly 102 is bonded to a vehicle. The vehicle roof assembly 102 may be bonded to the vehicle in a location and configuration, for example, as shown in **FIG. 1****.** Other locations, configurations and a variety of vehicle roof types are possible.

In some examples, the vehicle roof assembly is thus designed to incorporate one or more antennae directly within the outer RF transparent polymer roof panel. This integration may be helpful in maintaining the vehicle's sleek design by eliminating the need for traditional external antennae that can disrupt the vehicle's aerodynamic profile and aesthetic appeal. The antennae are strategically embedded within or adjacent the polymer material, which is selected for its RF transparency, ensuring that there is no metallic occlusion that could impede signal transmission or reception.

In particular, the integrated antennae are configured to meet stringent Field-of-View (FOV) requirements that can be important or at least helpful for robust communication. For LTE communication, in some examples the antennae provide a FOV ranging from 0-30 degrees from the horizon, ensuring reliable connectivity with cellular networks. For GNSS communication, a FOV of 75 degrees from zenith is provided in some examples, allowing for precise satellite navigation without signal obstruction.

The antenna module and mounting housing, which houses the integrated antennae, serves as a hub for various vehicle functions. It consolidates multiple components, including those required for satellite communication, LTE communication, interior infotainment systems such as microphones and switches, and exterior RF communications. This consolidation can result in a reduction of endpoints and electrical connections within the vehicle, streamlining the assembly process and enhancing overall system performance.

Furthermore, in some examples, the integrated antennae are designed to withstand adverse weather conditions, which can be a consideration for vehicle operation. Examples seek to ensure that antenna performance is not compromised by the accumulation of ice or snow on the vehicle's exterior. This can be achieved in some examples without the need for additional structural elements such as heater grids or wipe zones, which might otherwise be necessary to maintain antenna functionality in such conditions.

In **FIG. 6****,** enlarged views are provided of a first vehicle roof subassembly 504, an antenna module and mounting housing 222, a closeout panel 602 and a completed vehicle roof assembly 102 showing the example second adhesive application pattern 604.

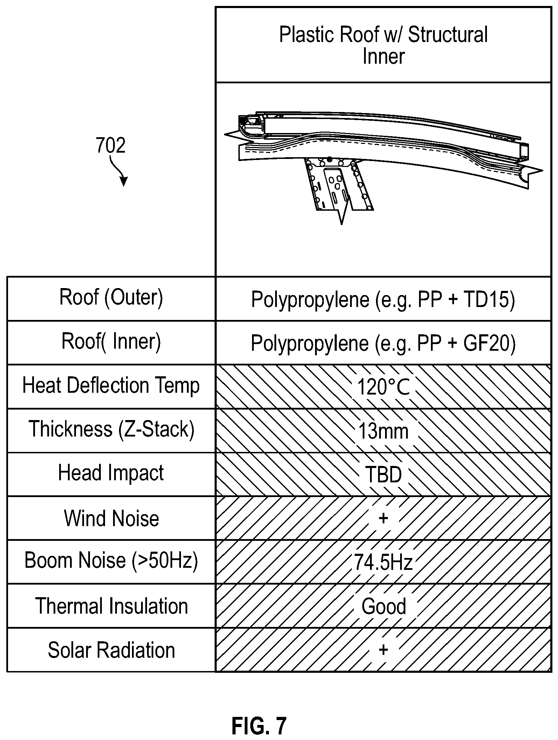

**FIG. 7** shows a table 702 of example specifications of various components of a vehicle roof assembly 102 of 102.

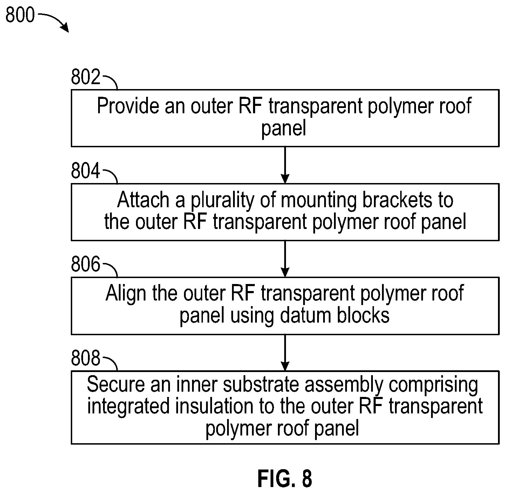

With reference to **FIG. 8****,** example operations in a method 800 for assembling a vehicle roof are now described. Although the described flow can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

In operation 802, method 800 provides an outer RF transparent polymer roof panel. In operation 804, method 800 attaches a plurality of mounting brackets to the outer RF transparent polymer roof panel. In operation 806, method 800 aligns the outer RF transparent polymer roof panel using datum blocks. In operation 808, method 800 secures an inner substrate assembly comprising integrated insulation to the outer RF transparent polymer roof panel.

In some examples, the method 800 may further include integrating one or more antennae within the outer RF transparent polymer roof panel for RF communication. In some examples, the method 800 may further include pre-populating the outer RF transparent polymer roof panel with one or more electrical components and configuring the outer RF transparent polymer roof panel to be installed into a vehicle roof subassembly as a single unit.

In some examples, the one or more electrical components include an electrical component selected from a group includes a map light, a microphone, a user-operable switch, a satellite communication component, a speaker, a Bluetooth low energy component, and a processor.

In some examples, the method 800 further includes wrapping a polymer substrate of the inner substrate assembly and bonding an insulation layer to a wrapped polymer substrate to enhance thermal and acoustic insulation properties of a vehicle roof assembly.

In some examples, the method 800 further includes selecting a material for the outer RF transparent polymer roof panel from a group of materials includes Polycarbonate (PC), Acrylonitrile Butadiene Styrene (ABS), and Acrylonitrile Styrene Acrylate (ASA). The method 800 may further include applying an adhesive between the outer RF transparent polymer roof panel and the inner substrate assembly to allow for deflection during an impact. The method 800 may further include molding one or more rib features into an RF transparent polymer roof devoid of an additional metallic roof crossbow.

In some examples, the method 800 may further include testing an assembled RF transparent vehicle roof for compliance with a head impact safety standard. In some examples, the outer RF transparent polymer roof panel is treated to be opaque to reduce solar radiation transmission into a vehicle interior. The method 800 may further include configuring the outer RF transparent polymer roof panel and the inner substrate assembly to stroke together through a deflection. Other technical features may be readily apparent to one skilled in the art from the following figures, descriptions, and claims.

In some examples, the vehicle roof assembly's integration with other vehicle systems is facilitated by the RF transparency of the polymer roof panel. This integration may allow for seamless communication between the vehicle's internal electronic modules and external devices such as satellites and cellular networks, without the need for external antennae that could disrupt the vehicle's aerodynamic profile and aesthetic design.

In some examples, the manufacturing process for the vehicle roof assembly includes techniques such as ultrasonic welding or heat-staking, which provide robust and reliable bonds between the polymer components without compromising the RF transparency. These processes are optimized for efficiency, reducing cycle times and costs while maintaining high-quality standards.

In some examples, the selected materials for the vehicle roof assembly are chosen not only for their functional properties but also for their environmental impact. The polymers used are recyclable and have been evaluated for their life cycle impact, ensuring that the vehicle roof assembly is as sustainable as it is functional.

### EXAMPLES

Thus, some examples may include one or more of the following examples.

Example 1. A vehicle roof assembly comprising an outer RF transparent polymer roof panel; and an inner substrate assembly including an insulation layer integrated therein.

Example 2. The vehicle roof assembly of example 1, wherein the outer RF transparent polymer roof panel is composed of a material selected from a group of materials comprising Polycarbonate (PC), Acrylonitrile Butadiene Styrene (ABS), and Acrylonitrile Styrene Acrylate (ASA).

Example 3. The vehicle roof assembly of example 1 or example 2, further comprising one or more antennae integrated within the outer RF transparent polymer roof panel for communication with an external device.

Example 4. The vehicle roof assembly of any one of examples 1-3, wherein the outer RF transparent polymer roof panel is pre-populated with one or more electrical components and configured to be installed into a vehicle roof subassembly as a single unit.

Example 5. The vehicle roof assembly of example 4, wherein the one or more electrical components includes an electrical component selected from a group comprising a map light, a microphone, a user-operable switch, a satellite communication component, a speaker, a Bluetooth low energy component, and a processor.

Example 6. The vehicle roof assembly of any one of examples 1-5, wherein the inner substrate assembly comprises a wrapped polymer substrate and an insulation layer bonded to the wrapped polymer substrate to enhance thermal and acoustic insulation properties of the vehicle roof assembly.

Example 7. The vehicle roof assembly of any one of examples 1-6, wherein the outer RF transparent polymer roof panel is opaque to reduce solar radiation transmission into a vehicle interior.

Example 8. The vehicle roof assembly of any one of examples 1-7, wherein the outer RF transparent polymer roof panel and the inner substrate assembly are bonded using an adhesive that allows for deflection of the vehicle roof assembly during an impact.

Example 9. The vehicle roof assembly of any one of examples 1-8, wherein the outer RF transparent polymer roof panel includes one or more molded rib features and is devoid of an additional metallic roof crossbow.

Example 10. The vehicle roof assembly of any one of examples 1-9, wherein the outer RF transparent polymer roof panel is dent-resistant and corrosion-resistant.

Example 11. The vehicle roof assembly of any one of examples 1-10, wherein the outer RF transparent polymer roof panel and the inner substrate assembly are configured to stroke together through a deflection.

Example 12. A method for assembling a vehicle roof, the method comprising: providing an outer RF transparent polymer roof panel; attaching a plurality of mounting brackets to the outer RF transparent polymer roof panel; aligning the outer RF transparent polymer roof panel using datum blocks; and securing an inner substrate assembly comprising integrated insulation to the outer RF transparent polymer roof panel.

Example 13. The method of example 12, further comprising integrating one or more antennae within the outer RF transparent polymer roof panel for RF communication.

Example 14. The method of example 12 or 13, further comprising pre-populating the outer RF transparent polymer roof panel with one or more electrical components and configuring the outer RF transparent polymer roof panel to be installed into a vehicle roof subassembly as a single unit.

Example 15. The method of example 14, wherein the one or more electrical components includes an electrical component selected from a group comprising a map light, a microphone, a user-operable switch, a satellite communication component, a speaker, a Bluetooth low energy component, and a processor.

Example 16. The method of any one of examples 12-15, further comprising wrapping a polymer substrate of the inner substrate assembly and bonding an insulation layer to a wrapped polymer substrate to enhance thermal and acoustic insulation properties of a vehicle roof assembly.

Example 17. The method of any one of examples 12-16, further comprising selecting a material for the outer RF transparent polymer roof panel from a group of materials comprising Polycarbonate (PC), Acrylonitrile Butadiene Styrene (ABS), and Acrylonitrile Styrene Acrylate (ASA).

Example 18. The method of any one of examples 12-17, further comprising applying an adhesive between the outer RF transparent polymer roof panel and the inner substrate assembly to allow for deflection during an impact.

Example 19. The method of any one of examples 12-18, further comprising molding one or more rib features into an RF transparent polymer roof devoid of an additional metallic roof crossbow.

Example 20. The method of any one of examples 12-19, further comprising testing an assembled RF transparent vehicle roof for compliance with a head impact safety standard.

Example 21. The method of any one of examples 12-20, wherein the outer RF transparent polymer roof panel is treated to be opaque to reduce solar radiation transmission into a vehicle interior.

Example 22. The method of any one of examples 12-21, further comprising configuring the outer RF transparent polymer roof panel and the inner substrate assembly to stroke together through a deflection.

Example 23. A vehicle roof assembly kit comprising: an outer RF transparent polymer roof panel; a plurality of mounting brackets; one or more datum blocks for alignment during assembly; and an inner substrate assembly comprising integrated insulation.

Example 24. The vehicle roof assembly kit of example 23, wherein the outer RF transparent polymer roof panel is composed of a material selected from a group of materials comprising Polycarbonate (PC), Acrylonitrile Butadiene Styrene (ABS), and Acrylonitrile Styrene Acrylate (ASA).

Example 25. The vehicle roof assembly kit of example 23 or 24, further comprising one or more antennae for integration within the outer RF transparent polymer roof panel for communication with an external device.

Example 26. The vehicle roof assembly kit of any one of examples 23-25, wherein the outer RF transparent polymer roof panel is pre-populated with one or more electrical components and configured to be installed into a vehicle roof subassembly as a single unit.

Example 27. The vehicle roof assembly kit of example 26, wherein the one or more electrical components includes an electrical component selected from a group comprising a map light, a microphone, a user-operable switch, a satellite communication component, a speaker, a Bluetooth low energy component, and a processor.

Example 28. A vehicle roof assembly comprising: an outer RF transparent polymer roof panel; and one or more antennae integrated within the outer RF transparent polymer roof panel, wherein the one or more antennae are configured to communicate with external devices without metallic occlusion.

Example 29. The vehicle roof assembly of example 28, wherein the one or more antennae are configured to meet specific Field-of-View (FOV) requirements, including a range of 0-30 degrees from a horizon for LTE communication and 75 degrees from zenith for GNSS communication.

Example 30. The vehicle roof assembly of example 28 or 29, wherein the one or more antennae are part of an electronic module that consolidates functions selected from a group comprising satellite communication, LTE communication, interior infotainment, and exterior RF communications.

Example 31. The vehicle roof assembly of any one of examples 28-30, wherein the one or more antennae are designed to maintain performance under adverse weather conditions, including a presence of ice or snow, devoid of a heater grid or a wipe zone.

In some examples, a method for manufacturing a vehicle roof assembly comprises: selecting an RF transparent polymer material for the outer roof panel; utilizing a bonding technique selected from the group consisting of ultrasonic welding, heat-staking, and adhesive bonding to join the outer roof panel to an inner substrate assembly; and integrating electronic modules within the outer roof panel using a process that maintains the RF transparency of the assembly.

In some examples, materials selected for the outer RF transparent polymer roof panel and the inner substrate assembly are recyclable and are chosen based on a life cycle assessment to minimize environmental impact.

In some examples, an acoustic layer is integrated within the inner substrate assembly 106, wherein the acoustic layer is composed of a material selected from the group consisting of melamine foam, polyurethane foam, and fibrous insulation materials, to enhance the sound dampening properties of the assembly.

In some examples, the insulation layer integrated within the inner substrate assembly comprises an aerogel material, providing thermal insulation properties while minimizing the thickness of the layer.

In some examples, a vehicle roof assembly kit comprises: an outer RF transparent polymer roof panel pre-populated with electronic modules; an inner substrate assembly including an integrated insulation layer; and a set of modular components configured for rapid assembly onto a vehicle frame, wherein the modular components include at least one of datum blocks, mounting brackets, and sealing elements.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration.

Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few. The elements of a method, process, routine, or algorithm described in connection with the examples disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some examples, such processes or portions thereof may be implemented on multiple computing devices and/or multiple processors, serially or in parallel.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially, concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

It will also be appreciated that one or more of the elements depicted in the drawings/figures can also be implemented in a more separated or integrated manner, or even removed or rendered as inoperable in certain cases, as is useful in accordance with a particular application.

## Claims

**1.** A vehicle roof assembly comprising:
an outer RF transparent polymer roof panel; and
an inner substrate assembly including an insulation layer integrated therein.

**2.** The vehicle roof assembly of claim 1, wherein the outer RF transparent polymer roof panel is composed of a material selected from a group of materials comprising Polycarbonate (PC), Acrylonitrile Butadiene Styrene (ABS), and Acrylonitrile Styrene Acrylate (ASA); or optionally
further comprising one or more antennae integrated within the outer RF transparent polymer roof panel for communication with an external device.

**4.** The vehicle roof assembly of any one of the preceding claims, wherein the outer RF transparent polymer roof panel is pre-populated with one or more electrical components and configured to be installed into a vehicle roof subassembly as a single unit.

**5.** The vehicle roof assembly of claim 4, wherein the one or more electrical components includes an electrical component selected from a group comprising a map light, a microphone, a user-operable switch, a satellite communication component, a speaker, a Bluetooth low energy component, and a processor.

**6.** The vehicle roof assembly of any one of the preceding claims, wherein the inner substrate assembly comprises a wrapped polymer substrate and an insulation layer bonded to the wrapped polymer substrate to enhance thermal and acoustic insulation properties of the vehicle roof assembly; or optionally wherein the outer RF transparent polymer roof panel is opaque to reduce solar radiation transmission into a vehicle interior; or optionally
wherein the outer RF transparent polymer roof panel and the inner substrate assembly are bonded using an adhesive that allows for deflection of the vehicle roof assembly during an impact; or optionally wherein the outer RF transparent polymer roof panel includes one or more molded rib features and is devoid of an additional metallic roof crossbow; or optionally
wherein the outer RF transparent polymer roof panel is dent-resistant and corrosion-resistant.; or optionally
wherein the outer RF transparent polymer roof panel and the inner substrate assembly are configured to stroke together through a deflection.

**7.** A method for assembling a vehicle roof, the method comprising:
providing an outer RF transparent polymer roof panel;
attaching a plurality of mounting brackets to the outer RF transparent polymer roof panel;
aligning the outer RF transparent polymer roof panel using datum blocks; and
securing an inner substrate assembly comprising integrated insulation to the outer RF transparent polymer roof panel.

**8.** The method of claim 7, further comprising integrating one or more antennae within the outer RF transparent polymer roof panel for RF communication.

**9.** The method of claim 7, further comprising pre-populating the outer RF transparent polymer roof panel with one or more electrical components and configuring the outer RF transparent polymer roof panel to be installed into a vehicle roof subassembly as a single unit; and optionally
wherein the one or more electrical components includes an electrical component selected from a group comprising a map light, a microphone, a user-operable switch, a satellite communication component, a speaker, a Bluetooth low energy component, and a processor.

**10.** The method of claim any one of the preceding claims, further comprising wrapping a polymer substrate of the inner substrate assembly and bonding an insulation layer to a wrapped polymer substrate to enhance thermal and acoustic insulation properties of a vehicle roof assembly; or optionally
further comprising selecting a material for the outer RF transparent polymer roof panel from a group of materials comprising Polycarbonate (PC), Acrylonitrile Butadiene Styrene (ABS), and Acrylonitrile Styrene Acrylate (ASA); or optionally
further comprising applying an adhesive between the outer RF transparent polymer roof panel and the inner substrate assembly to allow for deflection during an impact; or optionally
further comprising molding one or more rib features into an RF transparent polymer roof devoid of an additional metallic roof crossbow; or optionally
further comprising testing an assembled RF transparent vehicle roof for compliance with a head impact safety standard; or optionally wherein the outer RF transparent polymer roof panel is treated to be opaque to reduce solar radiation transmission into a vehicle interior; or optionally
further comprising configuring the outer RF transparent polymer roof panel and the inner substrate assembly to stroke together through a deflection.

**11.** A vehicle roof assembly kit comprising:
an outer RF transparent polymer roof panel;
a plurality of mounting brackets;
one or more datum blocks for alignment during assembly; and
an inner substrate assembly comprising integrated insulation.

**12.** The vehicle roof assembly kit of claim 11, wherein the outer RF transparent polymer roof panel is composed of a material selected from a group of materials comprising Polycarbonate (PC), Acrylonitrile Butadiene Styrene (ABS), and Acrylonitrile Styrene Acrylate (ASA); or optionally
further comprising one or more antennae for integration within the outer RF transparent polymer roof panel for communication with an external device.

**13.** The vehicle roof assembly kit of claim 23, wherein the outer RF transparent polymer roof panel is pre-populated with one or more electrical components and configured to be installed into a vehicle roof subassembly as a single unit; and optionally
wherein the one or more electrical components includes an electrical component selected from a group comprising a map light, a microphone, a user-operable switch, a satellite communication component, a speaker, a Bluetooth low energy component, and a processor.

**14.** A vehicle roof assembly comprising: an outer RF transparent polymer roof panel; and one or more antennae integrated within the outer RF transparent polymer roof panel, wherein the one or more antennae are configured to communicate with external devices without metallic occlusion.

**15.** The vehicle roof assembly of claim 14, wherein the one or more antennae are configured to meet specific Field-of-View (FOV) requirements, including a range of 0-30 degrees from a horizon for LTE communication and 75 degrees from zenith for GNSS communication; or optionally
wherein the one or more antennae are part of an electronic module that consolidates functions selected from a group comprising satellite communication, LTE communication, interior infotainment, and exterior RF communications; or optionally
wherein the one or more antennae are designed to maintain performance under adverse weather conditions, including a presence of ice or snow, devoid of a heater grid or a wipe zone.
